# EUROPÄISCHE PATENTSCHRIFT

(11) **EP 2 714 490 B1**
(45) Veröffentlichungstag und Bekanntmachung des Hinweises auf die Patenterteilung: **14.10.2015**
(21) Anmeldenummer: 12722733.8
(22) Anmeldetag: 21.05.2012
(51) Int. Cl.: B62D 25/08, B62D 21/15

(54) **FAHRZEUGKAROSSERIE UND DEREN VERWENDUNG**
VEHICLE BODY AND USE THEREOF
CARROSSERIE DE VÉHICULE ET UTILISATION DE LADITE CARROSSERIE

(30) Priorität: 25.05.2011 DE 102011103090
(43) Veröffentlichungstag der Anmeldung: 09.04.2014
(73) Patentinhaber: ThyssenKrupp Steel Europe AG, 47166 Duisburg (DE)
(72) Erfinder: ZÖRNACK, Markus, 44369 Dortmund (DE); PATBERG, Lothar, 47445 Moers (DE)
(74) Vertreter: Cohausz & Florack
(86) Internationale Anmeldenummer: PCT/EP2012/059345
(87) Internationale Veröffentlichungsnummer: WO 2012/160016

(56) Entgegenhaltungen:
- EP-A1- 1 840 004
- US-A1- 2002 008 408

## Beschreibung

Die Erfindung betrifft eine Fahrzeugkarosserie, insbesondere für Elektrokraftfahrzeuge, mit einem linksseitigen und einem rechtsseitigen Frontbereich und mit mindestens einem in einem Frontbereich in Längsrichtung verlaufenden ersten Längsträger, wobei in dem Frontbereich mindestens ein zweiter Längsträger vorgesehen ist, der außerhalb der horizontalen Ebene des ersten Längsträgers angeordnet ist und dessen Erstreckungsrichtung zu der Erstreckungsrichtung des ersten Längsträgers zumindest in horizontaler Projektion winklig verläuft. Weiterhin betrifft die Erfindung noch eine vorteilhafte Verwendung der Fahrzeugkarosserie.

Eine solche Fahrzeugkarosserie ist beispielsweise aus der EP 1 840 004 A1 bekannt. Diese Offenlegungsschrift offenbart eine Struktur eines Frontteils einer Fahrzeugkarosserie, deren Gerüst teilweise durch ein Paar von vorderen Säulen aufgebaut wird, die auf beiden Seiten in einer Fahrzeugbreitenrichtung in einem Fahrzeug angeordnet sind, wodurch ein Vorderteil einer Fahrgastzelle des Fahrzeugs gebildet wird. Das Vorderteil besteht dabei sowohl links- als auch rechtsseitig aus mindestens drei Längsträgern, wobei die Erstreckungsrichtung des einen Längsträgers in horizontaler Projektion winklig zu der Erstreckungsrichtung eines der anderen Längsträger verläuft

Ein vergleichbarer Frontbereich einer Fahrzeugkarosserie mit mindestens drei Längsträgern für die linke und die rechte Seite des Vorderteils ist auch aus der US 2002/0008408 A1 bekannt.

Des Weiteren offenbart die DE 100 23 112 A1 den Frontbereich eines Kraftfahrzeugs mit Verbrennungsmotor, in dem neben dem konventionellen linksseitigen und rechtsseitigen Längsträger mindestens ein weiterer in Längsrichtung verlaufender erster Längsträger vorgesehen ist, der in einer zur Ebene der anderen Längsträger versetzten Ebene angeordnet ist. Durch den zusätzlichen Längsträger wird ein weiterer Lastpfad bereitgestellt, so dass sich bei einem Frontalaufprall die Aufprallkraft auf mehrere Lastpfade verteilt und die einzelnen Komponenten damit kleiner dimensioniert werden können. Auf diese Weise kann das Gewicht der Fahrzeugkarosserie reduziert werden.

Die Vorgaben für die Widerstandsfähigkeit einer Fahrzeugkarosserie gegenüber einem Frontalaufprall ergeben sich beispielsweise aus dem europäischen Neuwagen-Bewertungsprogramm EuroNCAP. Darüber hinaus besteht jedoch ein Bedürfnis an Fahrzeugkarosserien, welche nicht nur den Anforderungen der EuroNCAP genügen, sondern auch bei anderen Aufprall-Szenarien eine gute Widerstandsfähigkeit aufweisen. Gleichzeitig soll das Gewicht der Fahrzeugkarosserie so gering wie möglich sein.

Vor diesem Hintergrund liegt der vorliegenden Erfindung die Aufgabe zugrunde, eine Fahrzeugkarosserie zur Verfügung zu stellen, welche bei geringem Gesamtgewicht hinsichtlich ihrer Widerstandsfähigkeit gegenüber einem schrägen Frontalaufprall verbessert ist.

Diese Aufgabe wird bei der eingangs genannten Fahrzeugkarosserie erfindungsgemäß dadurch gelöst, dass die Erstreckungsrichtungen einer Mehrzahl von zweiten Längsträgern in einem Frontbereich zumindest in horizontaler Projektion paarweise winklig zueinander verlaufen.

Es ist erkannt worden, dass die Widerstandsfähigkeit einer Fahrzeugkarosserie auf diese Weise gegenüber den bei einem schrägen Frontalaufprall auftretenden Aufprallkräften erhöht werden kann. Die Widerstandsfähigkeit eines Längsträgers hängt von der Richtung der Krafteinwirkung relativ zur Erstreckungsrichtung des Längsträgers ab. So ist die Widerstandsfähigkeit gegenüber in Erstreckungsrichtung wirkenden Kräften besonders hoch und nimmt zu größeren Winkeln zwischen der Kraftrichtung und der Erstreckungsrichtung ab. Ein Längsträger weist damit in einem bestimmten Raumwinkelbereich um seine Erstreckungsrichtung eine besonders hohe Widerstandsfähigkeit auf. Durch den winkligen Verlauf zweier Längsträger in verschiedenen horizontalen Ebenen wird nun errecht, dass die

Raumwinkelbereiche mit besonders hoher Widerstandskraft der einzelnen Längsträger in verschiedene horizontale Richtungen weisen, so dass die gesamte Fahrzeugkarosserie in einem in horizontaler Richtung vergrößerten Raumwinkelbereich eine hohe Widerstandsfähigkeit aufweist. Insbesondere kann auf diese Weise der Winkel zwischen der Erstreckungsrichtung eines Längsträgers und der Krafteinwirkung bei einem schrägen Frontalaufprall optimiert, d.h. gegen 0° verkleinert bzw. gegen 180° vergrößert werden, so dass es zu einer axialen Kompression einzelner Längsträger und damit zu einer verbesserten Energieabsorption kommt.

Gleichzeitig wird die Fahrzeugkarosserie durch die Anordnung des zweiten Längsträgers außerhalb der horizontalen Ebene des ersten Längsträgers durch die dadurch entstehende dreidimensionale Längsträger-Anordnung stabilisiert und erhält eine größere Steifigkeit. Insbesondere ergeben sich durch die dreidimensionale Struktur von der theoretisch neutralen Faser beabstandete Komponenten der Fahrzeugkarosserie, so dass deren Flächenträgheitsmoment und damit auch deren Steifigkeit erhöht werden. Insgesamt kann damit eine Fahrzeugkarosserie mit einer steiferen Struktur bei gleichzeitig erhöhter Widerstandsfähigkeit gegenüber aus verschiedenen Richtungen wirkenden Kräften erreicht werden.

Unter einem Längsträger wird ein im Wesentlichen in Längsrichtung der Kraftfahrzeugkarosserie verlaufendes, tragendes Element verstanden, insbesondere ein Profil oder ein tragendes Element in Schalenbauweise. Unter der Erstreckungsrichtung des Längsträgers wird der Richtungsvektor entlang der Längsausdehnung des Längsträgers verstanden, der in Richtung Front, d.h. zum vorderen Ende der Fahrzeugkarosserie zeigt. Der Winkel zwischen zwei Erstreckungsrichtungen ist entsprechend als Winkel zwischen den beiden, in einem gemeinsamen Vektorursprung aufgetragenen Richtungsvektoren definiert. Unter dem Winkel in horizontaler Projektion wird der von den Projektionen der Erstreckungsrichtungen in die horizontale Ebene eingeschlossene Winkel verstanden. Demnach wird unter einer Winkligkeit in horizontaler Projektion verstanden, dass die Projektionen der Erstreckungsrichtungen in die horizontale Ebene winklig zueinander verlaufen. Unter der horizontalen Ebene eines Längsträgers wird die horizontale Ebene durch den Schwerpunkt des Längsträgers verstanden.

Die ersten und/oder der mindestens eine zweite Längsträger sind vorzugsweise durchgehend. Unter einem durchgehenden Längsträger wird verstanden, dass der Längsträger sich in seiner Erstreckungsrichtung über den gesamten Frontbereiche erstreckt, d.h. bevorzugt von der Stirnwand bis zum Front-End-Modul. Auf diese Weise wird die Stabilität und Widerstandsfähigkeit des jeweiligen Längsträgers und damit der gesamten Fahrzeugkarosserie erhöht. Bevorzugt ist ein durchgehender Längsträger mit der Stirnwand und/oder dem Front-End-Modul kraft-, stoff- oder formschlüssig verbunden.

Unter der Widerstandsfähigkeit einer Fahrzeugkarosserie wird deren Fähigkeit verstanden, von außen wirkende Kräfte und übertragene Energien, beispielsweise bei einem Frontalaufprall, insbesondere durch eine Deformation zu absorbieren, so dass die Kräfte kontrolliert an die Fahrgastzelle weitergegeben werden. Die Widerstandsfähigkeit einer Fahrzeugkarosserie steigt, wenn bei gegebenem Kraftniveau, beispielsweise im Falle eines Frontalaufpralls, der Deformationsweg der Fahrzeugkarosserie kleiner ist. Unter der Steifigkeit bzw. Biegesteifigkeit wird der Widerstand eines Körpers gegen Verformung durch eine Kraft verstanden.

Die Begriffe linkseitiger und rechtsseitiger Frontbereich sind entsprechend der Blickrichtung eines in der Fahrzeugkarosserie in Fahrtrichtung sitzenden Fahrers gewählt.

Die Fahrzeugkarosserie ist insbesondere für Kraftfahrzeuge mit alternativen Antrieben, d.h. ohne Verbrennungsmotoren, geeignet, beispielsweise für Elektrokraftfahrzeuge. Bei Kraftfahrzeugen mit Verbrennungsmotoren nehmen die für den Antrieb erforderlichen Komponenten wie Motor, Lichtmaschine etc. viel Platz ein, so dass im Frontbereich der entsprechenden Fahrzeugkarosserien nur ein geringer Bauraum verbleibt und dem Konstrukteur nur wenige Freiheitsgrade für die Ausgestaltung der Fahrzeugkarosserie zur Verfügung stehen. Bei Fahrzeugkarosserien für Kraftfahrzeuge mit alternativen Antrieben sind die für den Antrieb erforderlichen Komponenten kleiner und/oder lassen sich flexibler anordnen, so dass der Frontbereich der entsprechenden Fahrzeugkarosserien eine verbesserte Bauraumsituation aufweist. Dadurch ist die Zahl der Freiheitsgrade für die konstruktive Ausgestaltung der Fahrzeugkarosserie, insbesondere für die Anordnung und Ausrichtung der Längsträger, erhöht, so dass sich die erfindungsgemäße Fahrzeugkarosserie besonders einfach bei Fahrzeugkarosserien für alternative Antriebe, insbesondere Elektroantriebe, realisieren lässt.

In einer ersten bevorzugten Ausführungsform der Fahrzeugkarosserie sind im linksseitigen Frontbereich und im rechtsseitigen Frontbereich jeweils mindestens drei durchgehende Längsträger vorgesehen, wobei in beiden Frontbereichen jeweils mindestens ein erster Längsträger in Längsrichtung verläuft, mindestens ein zweiter Längsträger außerhalb der horizontalen Ebene des ersten Längsträgers angeordnet ist und die Erstreckungsrichtung des zweiten Längsträgers zur Erstreckungsrichtung des ersten Längsträgers zumindest in horizontaler Projektion winklig verläuft. Es hat sich herausgestellt, dass durch die auf diese Weise angeordneten mindestens drei Längsträger pro Fahrzeughälfte gleichzeitig eine hohe Widerstandsfähigkeit, insbesondere gegenüber bei einem schrägen Frontalaufprall auftretenden Kräften, und eine hohe Steifigkeit der Fahrzeugkarosserie erreicht werden können.

Eine weitere Steigerung der Widerstandsfähigkeit kann in einer weiteren bevorzugten Ausführungsform der Fahrzeugkarosserie dadurch erreicht werden, dass die ersten und/oder die zweiten Längsträger aus hochfestem oder höherfestem Stahl hergestellt sind. Insbesondere können die ersten und/oder zweiten Längsträger insgesamt dünnwandiger bzw. kleiner dimensioniert werden. Dadurch kann auch der für die Längsträger erforderliche Bauraum reduziert werden.

Weiterhin kann auf diese Weise eine Gewichtseinsparung und eine Reduktion der Herstellungskosten erzielt werden.

In einer weiteren bevorzugten Ausführungsform der Fahrzeugkarosserie sind die Längsträger zum Teil oder vollständig als Hohlprofile ausgebildet, vorzugsweise mit einem runden Querschnitt. Hohlprofile bieten eine besonders hohe Stabilität bei gleichzeitig geringem Materialbedarf und Gewicht. Hohlprofile mit rundem Querschnitt sind zudem besonders einfach herzustellen. Die Hohlprofile können beispielsweise als Rollprofil oder durch U-O-Umformung hergestellt werden. Bevorzugt können entlang ihrer Erstreckungsrichtung geschlossene Hohlprofile verwendet werden, da diese bei einem Aufprall ein besonders hohes Energieabsorptionsvermögen aufweisen.

Die gesamte Widerstandsfähigkeit der Fahrzeugkarosserie kann in einer weiteren Ausführungsform dadurch verbessert werden, dass die Erstreckungsrichtung eines ersten Längsträgers in einem Frontbereich und die Erstreckungsrichtung eines zweiten Längsträgers in dem Frontbereich in horizontaler Projektion einen Winkel zwischen 5° und 45°, vorzugsweise zwischen 10° und 35°, besonders bevorzugt zwischen 15° und 25° einschließen. Diese Winkelbereiche haben sich als besonders vorteilhaft herausgestellt, um eine hohe Widerstandskraft der Fahrzeugkarosserie sowohl gegenüber einem geraden, als auch gegenüber einem schrägen Frontalaufprall zu erreichen. Bei einem zu geringen Winkel, d.h. insbesondere weniger als 5°, überlappen die Raumwinkelbereiche der Längsträger mit besonders hoher Widerstandskraft zu sehr, so dass die Widerstandskraft gegenüber einem schrägen Frontalaufprall nicht wesentlich verbessert werden kann. Ist der Winkel demgegenüber zu groß, d.h. insbesondere größer als 45°, so wird die Widerstandskraft der Fahrzeugkarosserie gegenüber einem geraden Frontalaufprall zu sehr geschwächt. Durch die oben genannten bevorzugten Winkelbereiche wird die Widerstandskraft der Fahrzeugkarosserie in den bei einem schrägen Frontalaufprall häufig kritischen Winkelbereichen verstärkt, ohne dass die gesamte Widerstandskraft der Fahrzeugkarosserie geschwächt wird. Die gesamte Widerstandskraft der Fahrzeugkarosserie kann weiterhin dadurch erhöht werden, dass die Längsträger durchgehend sind.

In einer weiteren Ausführungsform der Fahrzeugkarosserie weist ein Frontbereich eine Mehrzahl an zweiten Längsträgern auf, die außerhalb der horizontalen Ebene eines ersten Längsträgers angeordnet sind und deren Erstreckungsrichtungen zu der Erstreckungsrichtung des ersten Längsträgers zumindest in horizontaler Projektion winklig verlaufen. Durch die Mehrzahl an zweiten Längsträgern wird sowohl die Widerstandsfähigkeit, als auch die Steifigkeit der Fahrzeugkarosserie gegenüber den bei einem schrägen Frontalaufprall auftretenden Kräften verbessert. Bevorzugt sind mindestens zwei oder mindestens drei zweite Längsträger vorgesehen. Es hat sich herausgestellt, dass durch das Ersetzen eines Längsträgers durch mehrere, gegebenenfalls kleinere, insbesondere zweite Längsträger eine größere Steifigkeit und Widerstandsfähigkeit der Fahrzeugkarosserie, insbesondere gegenüber bei einem schrägen Frontalaufprall auftretenden Kräften, erreicht wird, ohne dass das Gewicht der Fahrzeugkarosserie erhöht werden muss.

In einer weiteren bevorzugten Ausführungsform der Fahrzeugkarosserie kann das Gewicht der Fahrzeugkarosserie dadurch weiter reduziert werden, dass mindestens ein zweiter Längsträger einen kleineren Querschnitt aufweist als ein erster Längsträger. Durch die mit dem mindestens einen zweiten Längsträger, bevorzugt mit der Mehrzahl an zweiten Längsträgern, erreichte Erhöhung der Widerstandsfähigkeit der Fahrzeugkarosserie, kann der Querschnitt der einzelnen Komponenten verringert und damit sowohl das Gewicht als auch der Platzbedarf der Karosseriekomponenten reduziert werden. Insbesondere ist erkannt worden, dass durch eine Mehrzahl von zweiten Längsträgern anstelle eines einzigen Längsträgers eine höhere steifigkeit und Stabilität erreicht werden kann, so dass die entsprechenden Komponenten, insbesondere die zweiten Längsträger, mit einem geringeren Querschnitt ausgebildet sein können.

Die Widerstandsfähigkeit der Fahrzeugkarosserie wird in einem besonders großen Winkelbereich gegenüber bei einem schrägen Frontaufprall wirkenden Kräften dadurch verbessert, dass erfindungsgemäß die Erstreckungsrichtungen einer Mehrzahl von zweiten Längsträgern in einem Frontbereich zumindest in horizontaler Projektion paarweise winklig zueinander verlaufen. Erfindungsgemäß ist demnach eine Mehrzahl von Längsträgern vorgesehen, deren Erstreckungsrichtungen in verschiedene Richtungen laufen. Durch die Überlagerung der Raumwinkelbereiche der einzelnen Längsträger mit besonders hoher Widerstandsfähigkeit weist die gesamte Fahrzeugkarosserie in einem großen Winkelbereich eine große Widerstandsfähigkeit auf. Insbesondere kommt es bei einem schrägen Frontalaufprall in dem Raumwinkelbereich zu einer axialen Stauchung eines oder mehrere zweiter Längsträger, wodurch ein großer Anteil der Aufprallenergie absorbiert werden kann.

In einer weiteren bevorzugten Ausführungsform der Fahrzeugkarosserie ist in einem Frontbereich mindestens ein zweiter Längsträger so angeordnet, dass sein der Front zugewandtes Ende in Querrichtung weiter außen liegt als sein dem Heck zugewandtes Ende. Unter dem Begriff "in Querrichtung außen" sind im linksseitigen Frontbereich die linke Seite und im rechtsseitigen Frontbereich die rechte Seite der Fahrzeugkarosserie zu verstehen. Auf diese Weise wird erreicht, dass die Erstreckungsrichtung eines solchen Längsträgers in einem Frontbereich in eine Richtung weist, aus welcher bei einem schrägen Frontalaufprall die größte Krafteinwirkung zu erwarten ist. Dadurch kann die Energie durch axiale Deformation dieses Längsträgers besonders gut absorbiert werden.

Die Steifigkeit und die Widerstandsfähigkeit der Fahrzeugkarosserie gegenüber einem Frontalaufprall lässt sich in einer weiteren Ausführungsform dadurch weiter verbessern, dass ein Frontbereich mindestens zwei in Längsrichtung verlaufende und im Wesentlichen zueinander parallele erste Längsträger aufweist.

Bei der weiteren bevorzugten Ausführungsform der Fahrzeugkarosserie sind die Längsträger im rechtsseitigen Frontbereich im Wesentlichen spiegelsymmetrisch zu den Längsträgern im linksseitigen Frontbereich angeordnet. Auf diese Weise weist die Fahrzeugkarosserie eine hohe Symmetrie und damit eine gleichmäßige Gewichtsverteilung auf, so dass ihre Spannungs- und Fahreigenschaften positiv beeinflusst werden. Weiterhin ist auf diese Weise auch eine einfachere und günstigere Herstellung der Fahrzeugkarosserie, insbesondere für Links- und Rechtslenker, möglich.

Es wurde festgestellt, dass die Widerstandsfähigkeit und Steifigkeit der Fahrzeugkarosserie besonders stark erhöht wird, wenn gemäß einem weiteren bevorzugten Ausführungsbeispiel in einem Frontbereich mindestens drei, bevorzugt mindestens vier, weiter bevorzugt mindestens fünf, insbesondere mindestens acht Längsträger vorgesehen sind. Dabei handelt es sich insbesondere sowohl um erste Längsträger als auch um zweite Längsträger. Dieser Ausführungsform liegt insbesondere die Erkenntnis zugrunde, dass ein sonst in herkömmlicher Weise verwendetes einzelnes Profil sehr flexibel durch eine Mehr- oder eine Vielzahl von Profilen ersetzt werden kann, welche dann ggf. mit einem geringen Querschnitt ausgebildet werden können. Insbesondere sind in einem Frontbereich oder in beiden Frontbereichen mindestens zwei, bevorzugt mindestens drei, weiter bevorzugt mindestens vier, insbesondere mindestens sieben zweite. Längsträger vorgesehen. Auf diese Weise werden bei einem schrägen Frontalaufprall mehrere zweite, bevorzugt kleinere Längsträger axial deformiert, wodurch eine bessere Energieabsorption im Vergleich zu einem einzelnen ersten Längsträger erreicht werden kann. Dadurch wird eine Erhöhung der Widerstandsfähigkeit der Fahrzeugkarosserie gegenüber aus verschiedenen Richtungen wirkenden Aufprallkräften erreicht.

Zur weiteren Erhöhung der Widerstandsfähigkeit bzw. der Steifigkeit der Fahrzeugkarosserie sind in einem weiteren Ausführungsbeispiel in einem Frontbereich mindestens zwei Längsträger, insbesondere ein erster Längsträger und ein zweiter Längsträger, miteinander verbunden, vorzugsweise durch ein Profil oder durch ein Blechstreifen. Insbesondere kann durch die Verbindung zweier Längsträger der Kraftfluss bei einem schrägen Frontalaufprall besser auf die einzelnen Längsträger verteilt werden, so dass die Widerstandsfähigkeit der Fahrzeugkarosserie trotz der gegebenenfalls mit geringerem Querschnitt ausgebildeten Längsträger erhalten bleibt.

Die zuvor beschriebene Fahrzeugkarosserie kann in einer weiteren Lehre der vorliegenden Erfindung erfindungsgemäß zur Herstellung eines Kraftfahrzeugs ohne Verbrennungsmotor, insbesondere eines Elektrokraftfahrzeugs verwendet werden. Es hat sich herausgestellt, dass der reduzierte Raumbedarf der Antriebseinheit bei derartigen Kraftfahrzeugen die Flexibilität bei der Ausgestaltung und der Anordnung der Karosseriekomponenten erhöht, so dass die erfindungsgemäße Fahrzeugkarosserie bei diesen Kraftfahrzeugen besonders vorteilhaft eingesetzt werden kann. Weiterhin ist die erfindungsgemäße Fahrzeugkarosserie gerade für Kraftfahrzeuge ohne Verbrennungsmotor vorteilhaft, da die bisher sehr beschränkten Reichweiten derartiger Kraftfahrzeuge durch die mit der erfindungsgemäßen Fahrzeugkarosserie möglichen Gewichtseinsparungen vergrößert werden kann.

Weitere Merkmale und Vorteile der vorliegenden Erfindung können der nachfolgenden Beschreibung mehrerer Ausführungsbeispiele entnommen werden, wobei auf die beigefügte Zeichnung Bezug genommen wird.

In der Zeichnung zeigen
- Fig. 1: ein erstes Ausführungsbeispiel der Fahrzeugkarosserie in schematischer perspektivischer Darstellung,
- Fig. 2: das Ausführungsbeispiel aus Fig. 1 in schematischer Aufsicht,
- Fig. 3a-b: die Bestimmung des Winkels zwischen den Erstreckungsrichtungen zweier Längsträger in horizontaler Projektion,
- Fig. 4a-b: ein zweites und ein drittes Ausführungsbeispiel der erfindungsgemäßen Fahrzeugkarosserie in schematischer Vorderansicht,
- Fig. 5a-b: die Ausführungsbeispiele aus Fig. 4a-b in schematischer Aufsicht und
- Fig. 6: ein viertes Ausführungsbeispiel der erfindungsgemäßen Fahrzeugkarosserie.

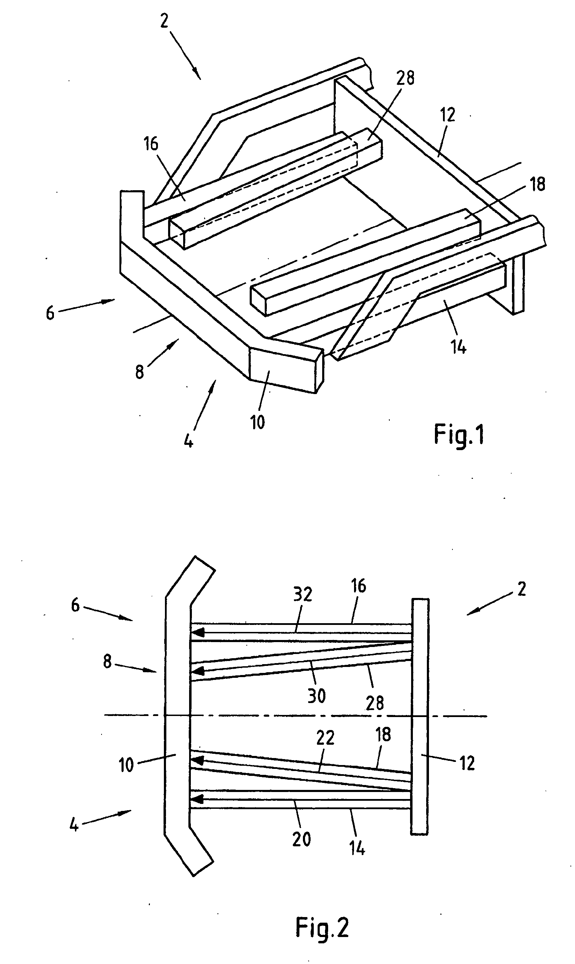

Ein erstes Ausführungsbeispiel der Fahrzeugkarosserie ist in Fig. 1 in perspektivischer Darstellung und in Fig. 2 in Aufsicht gezeigt. Die Fahrzeugkarosserie 2 weist einen linksseitigen Frontbereich 4 und einen rechtsseitigen Frontbereich 6 auf. Die Bezeichnungen "links" und "rechts" sind hierbei aus der Sicht eines Fahrers gewählt. Die Frontbereiche 4, 6 werden nach vorne durch das Front-End-Modul 8, insbesondere durch den Stoßfänger 10 begrenzt. Nach hinten werden die Frontbereiche 4, 6 durch die Stirnwand 12 begrenzt, welche den Motorraum von der Fahrgastzelle trennt. Der linksseitige 4 und der rechtsseitige Frontbereich 6 weisen jeweils einen in Längsrichtung verlaufenden ersten Längsträger 14, 16 auf, welcher in Fig. 1 durchgehend von der Stirnwand 12 bis zum Front-End-Modul 8 verläuft. Zur Erhöhung der Steifigkeit der Fahrzeugkarosserie 2 und der Widerstandsfähigkeit gegenüber einem schrägen Frontalaufprall ist im linksseitigen Frontbereich 4 weiterhin ein zweiter Längsträger 18 vorgesehen, der außerhalb der horizontalen Ebene des ersten Längsträgers 14, und zwar im vorliegend Ausführungsbeispiel nach oben versetzt angeordnet ist. Die Erstreckungsrichtung des zweiten Längsträgers 18 verläuft zu der Erstreckungsrichtung des ersten Längsträgers 14 in horizontaler Projektion winklig mit einem Winkel zwischen 5° und 45°, vorzugweise zwischen 10° und 35°. Im rechtsseitigen Frontbereich 6 ist ebenfalls ein zweiter Längsträger 28 vorgesehen, welcher außerhalb der horizontalen Ebene des ersten Längsträgers 16 angeordnet ist und dessen Erstreckungsrichtung 30 gegenüber der Erstreckungsrichtung 32 des ersten Längsträgers 16 in horizontaler Projektion winklig verläuft.

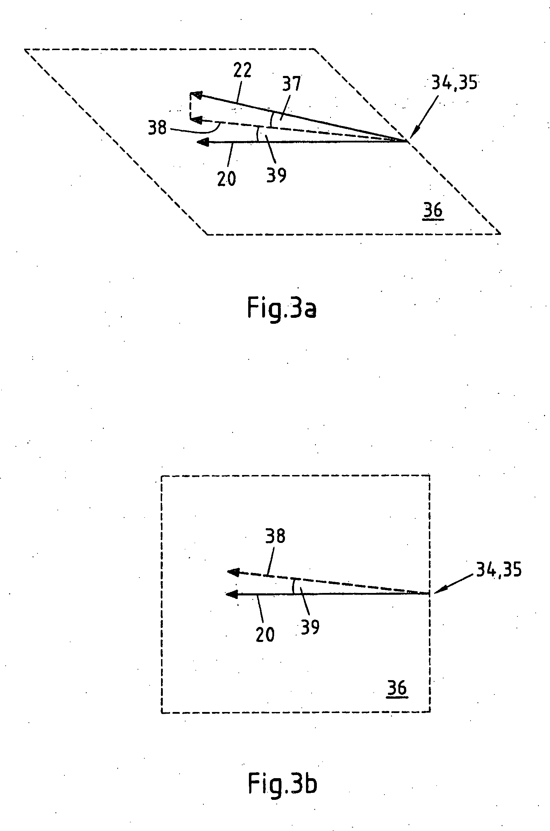

Die Bestimmung des Winkels in horizontaler Projektion ist in Fig. 3a in perspektivischer Ansicht und in Fig. 3b in Aufsicht dargestellt. Die Erstreckungsrichtungen 20, 22 der Längsträger 14, 18 sind als Richtungsvektoren eingezeichnet, wobei der Vektorursprung 34 der Erstreckungsrichtung 22 in den Vektorursprung 35 der Erstreckungsrichtung 20 verschoben wurde. Da die Erstreckungsrichtung 22 zu der horizontalen Ebene 36 des ersten Längsträgers 14 schräg in einem Winkel 37 verläuft, ist in Fig. 3a zudem die Projektion 38 der Erstreckungsrichtung 22 in die horizontale Ebene 36 dargestellt. Zwischen der Projektion 38 und der Erstreckungsrichtung 20 ergibt sich der gesuchte Winkel 39 in horizontaler Projektion.

In dem in Fig. 1 und Fig. 2 dargestellten Ausführungsbeispiel sind die Längsträger 16, 28 im rechtsseitigen Frontbereich 6 im Wesentlichen spiegelsymmetrisch zu den Längsträgern 14, 18 im linksseitigen Frontbereich angeordnet. Die Lage der Symmetrieebene ist durch die Strich-Punkt-Linie angedeutet. Damit sind beispielsweise auch die Winkel zwischen den jeweiligen ersten und zweiten Längsträgern gleich groß. Alternativ ist es natürlich auch möglich, eine asymmetrische Anordnung der Längsprofile vorzusehen, beispielsweise um einen asymmetrischen Bauraum für die für den Antrieb erforderlichen Komponenten zu Verfügung stellen zu können. Insgesamt besteht bei der Ausgestaltung der Fahrzeugkarosserie eine hohe Flexibilität. Die Längsträger 18, 29 können zudem auch schräge nach unten verlaufen, so dass der Abstand im Front-End-Modul-Bereich zwischen den Längsträgern 16 und 28 und 14 und 18 geringer ist als im Stirnwandbereich. Dieser Ansatz kann zur Erhöhung der Widerstandsfähigkeit beitragen.

Die Längsträger 14, 16, 18, 28 sind vorzugsweise aus hochfestem oder höherfestem Stahl hergestellt. Weiterhin handelt es sich vorzugsweise um Hohlprofile, beispielsweise mit rechteckigem Querschnitt oder auch mit rundem Querschnitt. Denkbar sind aber auch andere Querschnitte, z.B. mehreckig oder als Plus-Form.

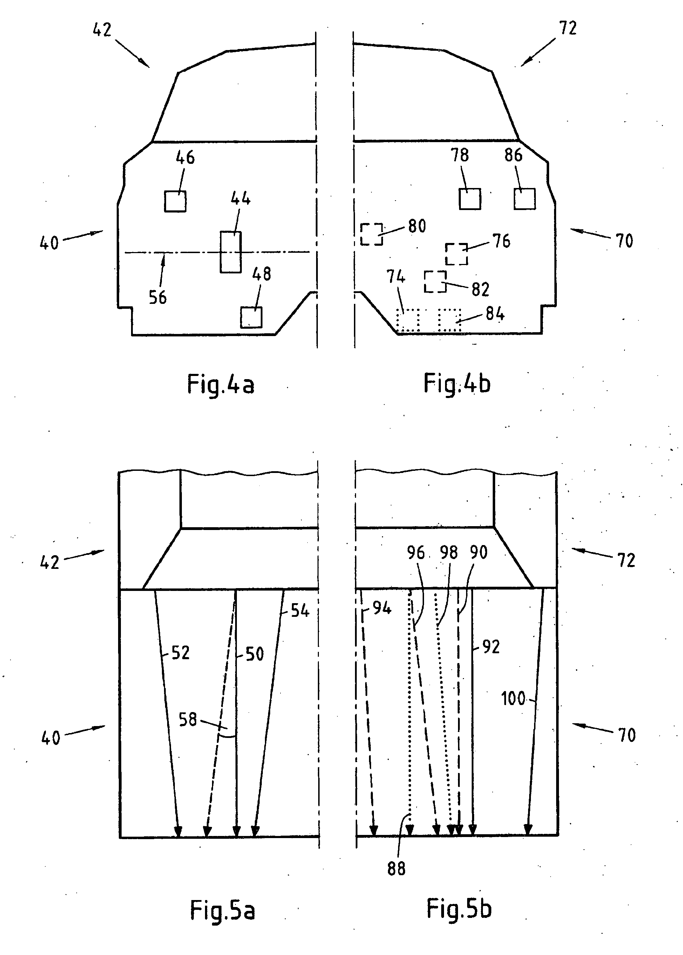

Fig. 4a zeigt ein zweites und Fig. 4b ein drittes Ausführungsbeispiel einer erfindungsgemäßen Fahrzeugkarosserie in einer schematischen Vorderansicht. Fig. 5a zeigt das zweite und Fig. 5b das dritte Ausführungsbeispiel zudem in Aufsicht.

In Fig. 4a ist ein rechtsseitiger Frontbereich 40 einer Fahrzeugkarosserie 42 dargestellt, in dem ein in Längsrichtung verlaufender erster Längsträger 44 und zwei zweite Längsträger 46 und 48 angeordnet sind. In Fig. 5a sind die Längsträger 44, 46 und 48 aus Gründen der Übersichtlichkeit lediglich als Richtungsvektoren dargestellt, welche die zugehörigen Erstreckungsrichtungen 50, 52 und 54 anzeigen. Die zweiten Längsträger 46 und 48 liegen jeweils außerhalb der horizontalen Ebene 56 des ersten Längsträgers 44, und zwar ist der zweite Längsträger 46 oberhalb und der zweite Längsträger 48 unterhalb der horizontalen Ebene 56 angeordnet. Natürlich ist auch eine andere Anordnung der Längsträger, insbesondere ein schräger Verlauf denkbar. Die Erstreckungsrichtungen 52, 54 der zweiten Längsträger 46, 48 verlaufen in horizontaler Projektion winklig gegenüber der Erstreckungsrichtung 50 des ersten Längsträgers 44. In Fig. 5a ist exemplarisch der Winkel 58 zwischen der Erstreckungsrichtung 50 des Längsträgers 44 und der Erstreckungsrichtung 54 des Längsträgers 48 veranschaulicht. Dazu ist die Erstreckungsrichtung 54 zusätzlich als gestrichelter Richtungsvektor vom Vektorursprung der Erstreckungsrichtung 50 eingezeichnet.

Es hat sich herausgestellt, dass durch das Vorsehen mindestens dreier Längsträger 44, 46, 48 pro Fahrzeughälfte, d.h. jeweils im linksseitigen und im rechtsseitigen Frontbereich, eine besonders hohe Steifigkeit und Widerstandsfähigkeit der Fahrzeugkarosserie erreicht werden kann. Bei der Fahrzeugkarosserie 42 weisen zudem die zweiten Längsträger 46, 48 bevorzugt zueinander winklige Erstreckungsrichtungen 52, 54 auf. Auf diese Weise wird die Widerstandsfähigkeit der Fahrzeugkarosserie 42 gegenüber aus verschiedenen Richtungen wirkenden Aufprallkräften verbessert.

In Fig. 4b ist ein linksseitiger Frontbereich 70 einer Fahrzeugkarosserie 72 dargestellt. Der linksseitige Frontbereich 70 weist insgesamt sieben Längsträger auf, wobei die Längsträger 74, 76, 78 als in Längsrichtung verlaufende erste Längsträger und die Längsträger 80, 82, 84, 86 als zweite Längsträger ausgebildet sind, wobei auch ein insbesondere schräger Verlauf mindestens eines zweiten Längsträger denkbar ist. Die Längsträger 74, 76, 78, 80, 82, 84, 86 sind in Fig. 5b aus Gründen der Übersichtlichkeit lediglich als Richtungsvektoren dargestellt, welche die zugehörigen Erstreckungsrichtungen 88, 90, 92, 94, 96, 98, 100 anzeigen. Erstreckungsrichtung 88 ist demnach dem Längsträger 74 zugeordnet, Erstreckungsrichtung 90 ist dem Längsträger 76 zugeordnet usw. Zur übersichtlicheren Darstellung sind die in einer unteren Ebene angeordneten Längsträger 74 und 84 in Fig. 4b sowie die zugehörigen Erstreckungsrichtungen 88 und 98 in Fig. 5b punktiert, die in einer oberen Ebene angeordneten Längsträger 78 und 86 in Fig. 4b sowie die zugehörigen Erstreckungsrichtungen 92 und 100 in Fig. 5b durchgezogen und die übrigen Längsträger sowie zugehörigen Erstreckungsrichtungen gestrichelt dargestellt.

Durch das Vorsehen einer Mehrzahl von Längsträgern 74, 76, 78, 80, 82, 84, 86, insbesondere einer Mehrzahl von zweiten Längsträgern 80, 82, 84, 86, kann die Steifigkeit und die Widerstandsfähigkeit der Fahrzeugkarosserie 72 stark erhöht werden. Alternativ oder zusätzlich kann auch das Gesamtgewicht der Fahrzeugkarosserie reduziert werden, indem mindestens ein Längsträger, bevorzugt ein zweiter Längsträger mit einem geringeren Querschnitt ausgebildet wird.

Die zweiten Längsträger 80, 82, 84, 86 liegen wie aus Fig. 4 ersichtlich jeweils außerhalb der horizontalen Ebene zumindest eines der ersten Längsträger 74, 76, 78. Optional können die zweiten Längsträger sogar außerhalb der Ebenen sämtlicher ersten Längsträger 74, 76, 78 angeordnet werden.

Die Erstreckungsrichtungen 94, 96, 98, 100 der zweiten Längsträger 80, 82, 84, 86 verlaufen in horizontaler Projektion jeweils winklig zu den Erstreckungsrichtungen 88, 90, 92 der ersten Längsträger 74, 76, 78. Bevorzugt sind die Erstreckungsrichtungen 94, 96, 98, 100 der zweiten Längsträger 80, 82, 84 ,86 jeweils paarweise winklig zueinander und weisen demnach in verschiedene Richtungen. Auf diese Weise kann die Widerstandsfähigkeit in verschiedene Richtungen und damit in einem großen Winkelbereich gegenüber angreifenden Kräften, beispielsweise bei einem schrägen Frontalaufprall, erhöht werden.

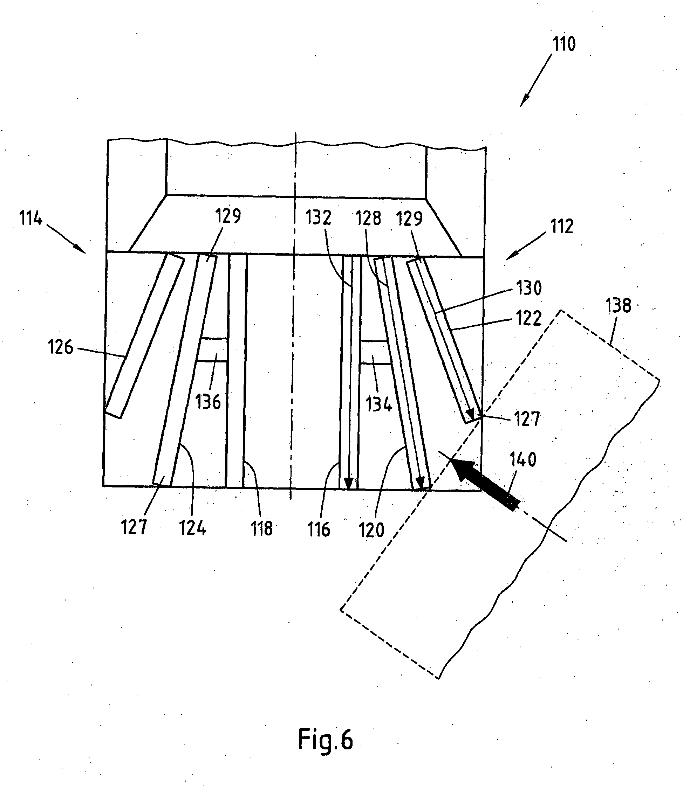

Fig. 6 zeigt ein viertes Ausführungsbeispiel der erfindungsgemäßen Fahrzeugkarosserie. Die Fahrzeugkarosserie 110 weist einen linksseitigen Frontbereich 112 und einen rechtsseitigen Frontbereich 114 auf, wobei in den Frontbereichen 112, 114 jeweils ein in Längsrichtung verlaufender erster Längsträger 116, 118 und jeweils zwei zweite Längsträger 120, 122 sowie 124, 126 vorgesehen sind. Die zweiten Längsträger 120 und 122 liegen außerhalb der horizontalen Ebene des ersten Längsträgers 116 und deren Erstreckungsrichtungen 128, 130 verlaufen in horizontaler Projektion winklig gegenüber der Erstreckungsrichtung 132 des ersten Längsträgers 116. Weiterhin sind auch die Erstreckungsrichtungen 128, 130 der zweiten Längsträger 120, 122 in horizontaler Projektion winklig zueinander. Die Längsträger 118, 124, 126 im rechtsseitigen Frontbereich 114 sind spiegelbildlich zu denen des linken Frontbereichs 112 angeordnet. Zur Erhöhung der Steifigkeit der Fahrzeugkarosserie 110 sind weiterhin die ersten Längsträger 116, 118 jeweils über einen verschweißten Blechstreifen 134, 136 mit einem zweiten Längsträger 120, 124 verbunden.

Die zweiten Längsträger 120, 122, 124, 126 sind weiterhin insbesondere so angeordnet, dass das der Frontseite zugewandtes Ende 127 in Querrichtung jeweils weiter außen liegt als das dem Heck zugewandte Ende 129. Dadurch wird die Widerstandsfähigkeit der Fahrzeugkarosserie 110 gegenüber einem schrägen Frontalaufprall erheblich erhöht, wie im Folgenden ausgeführt wird.

Fig. 6 zeigt die Situation bei einem schrägen Frontalaufprall, bei dem ein Fahrzeug 134 schräg von vorne auf die Fahrzeugkarosserie 110 auffährt. Die von des Fahrzeug 138 auf die Fahrzeugkarosserie 110 wirkende Kraft 140 ist als Pfeil dargestellt. Während die Kraft 140 auf den ersten Längsträger 116 im Wesentlichen seitlich wirkt, liegen die Erstreckungsrichtungen 128, 130 der zweiten Längsträger jeweils in einer Achse, welche zu der Richtung der Kraft 140 einen flacheren Winkel aufweist. Dadurch kommt es bei dem Zusammenstoß auch zu einer axialen Stauchung insbesondere des zweiten Längsträgers 122, aber auch des zweiten Längsträgers 120, so dass ein großer Teil der Aufprallenergie absorbiert werden kann. Aufgrund der höheren Energieabsorptionsfähigkeit der zweiten Längsträger 120, 122 in axialer Richtung können die Längsträger mit einem geringerem Querschnitt und/oder dünnwandiger ausgebildet werden, ohne dass die Fahrzeugkarosserie 110 an Widerstandsfähigkeit gegenüber einem schrägen Frontalaufprall einbüßt.

## Patentansprüche

1. Fahrzeugkarosserie (2, 42, 72, 110), insbesondere für Elektrokraftfährzeuge, mit einem linksseitigen und einem rechtsseitigen Frontbereich (4, 6, 40, 70, 112, 114) und mit mindestens einem in einem der Frontbereiche (4, 6, 40, 70, 112, 114) in Längsrichtung verlaufenden ersten Längsträger (14, 16, 44, 74, 76, 78, 116, 118), wobei im linkseitigen Frontbereich (4, 6, 40, 70, 112, 114) und im rechtsseitigen Frontbereich (4, 6, 40, 70, 112, 114) jeweils mindestens drei durchgehende Längsträger (14, 16, 18, 28, 44, 46, 48, 74, 76, 78, 80, 82, 84, 86, 116, 118, 120, 122, 124, 126) vorgesehen sind, wobei in beiden Frontbereichen (4, 6, 40, 70, 112, 114) jeweils mindestens ein erster Längsträger (14, 16, 44, 74, 76, 78, 116, 118) in Längsrichtung verläuft, mindestens ein zweiter Längsträger (18, 28, 46, 48, 80, 82, 84, 86, 120, 122, 124, 126) außerhalb der horizontalen Ebene (56) des ersten Längsträgers (14, 16, 44, 74, 76, 78, 116, 118) angeordnet ist und die Erstreckungsrichtung (22, 30, 52, 54, 94, 96, 98, 100, 128, 130) des zweiten Längsträgers (18, 28, 46, 48, 80, 82, 84, 86, 120, 122, 124, 126) zu der Erstreckungsrichtung (20, 32, 50, 88, 90, 92, 132) des ersten Längsträgers (14, 16, 44, 74, 76, 78, 116, 118) zumindest in horizontaler Projektion winklig verläuft,
**dadurch gekennzeichnet, dass** die Erstreckungsrichtungen (22, 30, 52, 54, 94, 96, 98, 100, 128, 130) einer Mehrzahl von zweiten Längsträgern (18, 28, 46, 48, 80, 82, 84, 86, 120, 122, 124, 126) in einem Frontbereich (4, 6, 40, 70, 112, 114) zumindest in horizontaler Projektion paarweise winklig zueinander verlaufen.

2. Fahrzeugkarosserie nach Anspruch 1,
**dadurch gekennzeichnet, dass** die ersten (14, 16, 44, 74, 76, 78, 116, 118) und/oder die zweiten Längsträger (18, 28, 46, 48, 80, 82, 84, 86, 120, 122, 124, 126) aus hochfestem oder höherfestem Stahl hergestellt sind.

3. Fahrzeugkarosserie nach einem der Ansprüche 1 bis 2,
**dadurch gekennzeichnet, dass** die Längsträger (14, 16, 18, 28, 44, 46, 48, 74, 76, 78, 80, 82, 84, 86, 116, 118, 120, 122, 124, 126) zum Teil oder vollständig als Hohlprofile ausgebildet sind, vorzugsweise mit einem runden Querschnitt.

4. Fahrzeugkarosserie nach einem der Ansprüche 1 bis 3,
**dadurch gekennzeichnet, dass** die Erstreckungsrichtung (20, 32, 50, 88, 90, 92, 132) eines ersten Längsträgers (14, 16, 44, 74, 76, 78, 116, 118) in einem Frontbereich (4, 6, 40, 70, 112, 114) und die Erstreckungsrichtung (22, 30, 52, 54, 94, 96, 98, 100, 128, 130) eines zweiten Längsträgers (18, 28, 46, 48, 80, 82, 84, 86, 120, 122, 124, 126) in dem Frontbereich (4, 6, 40, 70, 112, 114) in horizontaler Projektion einen Winkel (39, 58) zwischen 5° und 45°, vorzugsweise zwischen 10° und 35° einschließen.

5. Fahrzeugkarosserie nach einem der Ansprüche 1 bis 4,
**dadurch gekennzeichnet, dass** ein Frontbereich (4, 6, 40, 70, 112, 114) eine Mehrzahl an zweiten Längsträgern (18, 28, 46, 48, 80, 82, 84, 86, 120, 122, 124, 126) aufweist, die außerhalb der horizontalen Ebene (56) eines ersten Längsträgers (14, 16, 44, 74, 76, 78, 116, 118) angeordnet sind und deren Erstreckungsrichtungen (22, 30, 52, 54, 94, 96, 98, 100, 128, 130) zu der Erstreckungsrichtung (20, 32, 50, 88, 90, 92, 132) des ersten Längsträgers (14, 16, 44, 74, 76, 78, 116, 118) zumindest in horizontaler Projektion winklig verlaufen.

6. Fahrzeugkarosserie nach einem der Ansprüche 1 bis 5,
**dadurch gekennzeichnet, dass** mindestens ein zweiter Längsträger (18, 28, 46, 48, 80, 82, 84, 86, 120, 122, 124, 126) einen kleineren Querschnitt aufweist als ein erster Längsträger (14, 16, 44, 74, 76, 78, 116, 118).

7. Fahrzeugkarosserie nach einem der Ansprüche 1 bis 6,
**dadurch gekennzeichnet, dass** in einem Frontbereich (4, 6, 40, 70, 112, 114) mindestens ein zweiter Längsträger (18, 28, 46, 48, 80, 82, 84, 86, 120, 122, 124, 126) so angeordnet ist, dass sein der Front zugewandtes Ende in Querrichtung weiter außen liegt als sein dem Heck zugewandtes Ende.

8. Fahrzeugkarosserie nach einem der Ansprüche 1 bis 7,
**dadurch gekennzeichnet, dass** die Anordnung der zweiten Längsträger (18, 28, 46, 48, 80, 82, 84, 86, 120, 122, 124, 126) belastungsgerecht an die bei einem schrägen Frontalaufprall auftretenden Kräfte angepasst ist.

9. Fahrzeugkarosserie nach einem der Ansprüche 1 bis 8,
**dadurch gekennzeichnet, dass** ein Frontbereich (4, 6, 40, 70, 112, 114) mindestens zwei in Längsrichtung verlaufende und im Wesentlichen zueinander parallele erste Längsträger (14, 16, 44, 74, 76, 78, 116, 118) aufweist.

10. Fahrzeugkarosserie nach einem der Ansprüche 1 bis 9,
**dadurch gekennzeichnet, dass** die Längsträger (14, 16, 18, 28, 44, 46, 48, 74, 76, 78, 80, 82, 84, 86, 116, 118, 120, 122, 124, 126) im rechtsseitigen Frontbereich (4, 6, 40, 70, 112, 114) im Wesentlichen spiegelsymmetrisch zu den Längsträgern (14, 16, 18, 28, 44, 46, 48, 74, 76, 78, 80, 82, 84, 86, 116, 118, 120, 122, 124, 126) im linksseitigen Frontbereich (4, 6, 40, 70, 112, 114) angeordnet sind.

11. Fahrzeugkarosserie nach einem der Ansprüche 1 bis 10,
**dadurch gekennzeichnet, dass** in einem Frontbereich (4, 6, 40, 70, 112, 114) mindestens vier, bevorzugt mindestens fünf, weiter bevorzugt mindestens acht Längsträger (14, 16, 18, 28, 44, 46, 48, 74, 76, 78, 80, 82, 84, 86, 116, 118, 120, 122, 124, 126) vorgesehen sind.

12. Fahrzeugkarosserie nach einem der Ansprüche 1 bis 11,
**dadurch gekennzeichnet, dass** in einem Frontbereich (4, 6, 40, 70, 112, 114) mindestens zwei Längsträger (14, 16, 18, 28, 44, 46, 48, 74, 76, 78, 80, 82, 84, 86, 116, 118, 120, 122, 124, 126), insbesondere ein erster Längsträger (14, 16, 44, 74, 76, 78, 116, 118) und ein zweiter Längsträger (18, 28, 46, 48, 80, 82, 84, 86, 120, 122, 124, 126), miteinander verbunden sind, vorzugsweise durch ein Profil oder durch einen Blechstreifen (134, 136).

13. Verwendung einer Fahrzeugkarosserie (2, 42, 72, 110) nach einem der Ansprüche 1 bis 12 zur Herstellung eines Kraftfahrzeugs ohne Verbrennungsmotor, insbesondere eines Elektrokraftfahrzeugs.

## Claims

1. Vehicle body (2, 42, 72, 110), in particular for electric motor vehicles, having a left-hand and a right-hand front region (4, 6, 40, 70, 112, 114) and at least one first longitudinal member (14,16,44, 74, 76, 78, 116, 118) extending in one of the front regions (4, 6,40, 70,112,114) in the longitudinal direction, wherein in the left-hand front region (4, 6, 40, 70, 112, 114) and in the right-hand front region (4, 6, 40, 70,112,114) in each case at least three continuous longitudinal members (14, 16,18, 28, 44, 46, 48, 74, 76, 78, 80, 82, 84, 86, 116, 118, 120, 122, 124, 126) are provided, wherein in both front regions (4, 6,40, 70,112,114) in each case at least one first longitudinal member (14,16,44, 74, 76, 78,116,118) extends in the longitudinal direction, at least one second longitudinal member (18, 28,46,48, 80, 82, 84, 86, 120, 122, 124, 126) is arranged outside the horizontal plane (56) of the first longitudinal member (14, 16, 44, 74, 76, 78,116, 118) and the direction of extension (22, 30, 52, 54, 94, 96, 98, 100, 128, 130) of the second longitudinal member (18, 28, 46, 48, 80, 82, 84, 86, 120, 122, 124, 126) extends at an angle to the direction of extension (20, 32, 50,88, 90,92,132) of the first longitudinal member (14,16,44, 74, 76, 78,116,118) at least in horizontal projection, **characterised in that** the directions of extension (22, 30, 52, 54, 94, 96, 98, 100,128, 130) of a plurality of second longitudinal members (18, 28, 46, 48, 80, 82, 84, 86, 120, 122, 124, 126) in a front region (4, 6, 40, 70, 112, 114) extend angularly in pairs to one another at least in horizontal projection.

2. Vehicle body according to claim 1, **characterised in that** the first (14,16,44, 74, 76, 78, 116, 118) and/or the second (18, 28, 46, 48, 80, 82, 84, 86, 120, 122, 124, 126) longitudinal member is/are made of high-strength or higher-strength steel.

3. Vehicle body according to any one of claims 1 to 2, **characterised in that** the longitudinal members (14,16,18, 28,44,46,48, 74, 76, 78, 80, 82, 84, 86, 116, 118, 120,122, 124,126) are partly or completely designed as a hollow profile, preferably with a circular cross-section.

4. Vehicle body according to any one of claims 1 to 3, **characterised in that** the direction of extension (20, 32, 50, 88, 90, 92,132) of a first longitudinal member (14, 16, 44, 74, 76, 78,116,118) in a front region (4, 6, 40, 70,112,114) and the direction of extension (22, 30, 52, 54, 94, 96, 98, 100,128,130) of a second longitudinal member (18, 28, 46, 48 , 80, 82, 84, 86, 120, 122, 124, 126) in the front region (4, 6, 40, 70, 112, 114) in horizontal projection include an angle (39, 58) of between 5° and 45 °, preferably of between 10° and 35 °.

5. Vehicle body according to any one of claims 1 to 4, **characterised in that** a front region (4, 6,40, 70, 112, 114) has a plurality of second longitudinal members (18, 28, 46, 48, 80, 82, 84, 86,120,122,124,126), which are arranged outside the horizontal plane (56) of a first longitudinal member (14, 16, 44, 74, 76, 78, 116, 118) and whose directions of extension (22, 30, 52, 54, 94, 96, 98, 100, 128, 130) extend angularly to the direction of extension (20, 32, 50,88, 90, 92,132) of the first longitudinal member (14,16,44, 74, 76, 78, 116, 118) at least in horizontal projection.

6. Vehicle body according to any one of claims 1 to 5, **characterised in that** at least one second longitudinal member (18, 28, 46, 48, 80, 82, 84, 86, 120, 122, 124, 126) has a smaller cross-section than a first longitudinal member (14,16,44, 74, 76, 78, 116, 118).

7. Vehicle body according to any one of claims 1 to 6, **characterised in that** in a front region (4, 6, 40, 70, 112, 114) at least one second longitudinal member (18, 28, 46, 48, 80, 82, 84, 86, 120, 122, 124, 126) is arranged in such a way that its end facing the front is located more externally in the transverse direction than its end facing the rear.

8. Vehicle body according to any one of claims 1 to 7, **characterised in that** the second longitudinal member (18, 28, 46, 48, 80, 82, 84, 86, 120, 122, 124, 126) is arranged to cope with the stress caused by the forces acting on these during an oblique frontal impact.

9. Vehicle body according to any one of claims 1 to 8, **characterised in that** a front region (4, 6, 40, 70,112,114) has at least two longitudinally extending and substantially mutually parallel first longitudinal members (14, 16, 44, 74, 76, 78, 116, 118).

10. Vehicle body according to any one of claims 1 to 9, **characterised in that** the longitudinal members (14, 16, 18, 28, 44, 46, 48, 74, 76, 78, 80, 82, 84, 86, 116, 118, 120, 122, 124, 126) in the right-hand front region (4, 6, 40, 70,112,114) are arranged substantially mirror-symmetrically to the longitudinal members (14, 16, 18, 28, 44, 46, 48, 74, 76, 78, 80, 82, 84, 86, 116, 118, 120, 122, 124, 126) in the left-hand front region (4,6,40, 70,112,114).

11. Vehicle body according to any one of claims 1 to 10, **characterised in that** in a front region (4, 6, 40, 70, 112, 114) at least four, preferably at least five, more preferably at least eight longitudinal members (14,16,18, 28, 44, 46, 48, 74, 76, 78, 80, 82, 84, 86, 116, 118, 120, 122, 124, 126) are provided.

12. Vehicle body according to any one of claims 1 to 11, **characterised in that** in a front region (4, 6, 40, 70,112,114) at least two longitudinal members (14,16,18, 28, 44, 46, 48, 74, 76, 78, 80, 82, 84, 86, 116, 118, 120, 122, 124, 126), in particular a first longitudinal member (14,16, 44, 74, 76, 78,116,118) and a second longitudinal member (18, 28, 46, 48, 80, 82, 84, 86, 120, 122, 124, 126) are interconnected, preferably by a profile or a strip of sheet metal (134,136).

13. Use of a vehicle body (2, 42, 72, 110) according to any one of claims 1 to 12 for producing a vehicle without a combustion engine, in particular an electric motor vehicle.

## Revendications

1. Carrosserie de véhicule (2,42, 72, 110), en particulier pour véhicules électriques, comportant une zone frontale du côté gauche et du côté droit (4, 6, 40, 70, 112, 114) et comportant au moins un premier longeron (14,16,44, 74, 76, 78,116, 118) s'étendant dans la direction longitudinale dans une des zones frontales (4, 6, 40, 70, 112, 114), dans lequel dans la zone frontale du côté gauche(4, 6, 40, 70, 112,114) et dans la zone frontale du côté droit (4,6,40, 70,112,114) respectivement au moins trois longerons traversants (14,16,18, 28,44,46,48, 74, 76, 78, 80, 82, 84, 86, 116, 118, 120, 122, 124, 126) sont prévus, dans laquelle dans les deux zones frontales (4,6,40,70,112,114) respectivement au moins un premier longeron (14, 16, 44, 74, 76, 78, 116, 118) s'étend dans la direction longitudinale, au moins un deuxième longeron (18, 28, 46, 48, 80, 82, 84, 86, 120, 122, 124, 126) est disposé à l'extérieur du plan horizontal (56) du premier longeron (14, 16, 44, 74, 76, 78,116,118) et la direction d'extension (22, 30, 52, 54,94,96,98,100,128,130) du deuxième longeron (18, 28, 46, 48, 80, 82, 84, 86, 120, 122, 124, 126) par rapport à la direction d'extension (20, 32, 50, 88, 90, 92, 132) du premier longeron (14,16,44, 74, 76, 78, 116, 118) s'étend en formant un angle au moins dans une projection horizontale,
**caractérisée en ce que** les directions d'extension (22,30,52, 54,94,96,98,100, 128, 130) d'une pluralité de deuxièmes longerons (18, 28, 46, 48, 80, 82, 84, 86, 120, 122, 124, 126) dans une zone frontale (4, 6, 40, 70, 122, 114) s'étendent par paires en formant un angle les uns par rapport aux autres au moins dans une projection horizontale.

2. Carrosserie de véhicule selon la revendication 1, **caractérisée en ce que** les premiers (14, 16, 44, 74, 76, 78, 116, 118) et/ou les deuxièmes (18, 28, 46, 48, 80, 82, 84, 86, 120, 122, 124, 126) longerons sont fabriqués dans un acier à haute résistance ou à résistant supérieure.

3. Carrosserie de véhicule selon une des revendications 1 à 2, **caractérisée en ce que** les longerons (14, 16, 18, 28, 44, 46, 48, 74, 76, 78, 80, 82, 84, 86, 116, 118, 120, 122,124,126) sont conçus en partie ou en totalité comme des profilés creux, de préférence avec une section transversale ronde.

4. Carrosserie de véhicule selon une des revendications 1 à 3, **caractérisée en ce que** la direction d'extension (20, 32, 50, 88, 90, 92, 132) d'un premier longeron (14, 16,44, 74, 76, 78,116,118) dans une zone frontale (4, 6, 40, 70, 112, 114) et la direction d'extension (22, 30, 52, 54, 94, 96, 98, 100, 128, 130) d'un deuxième longeron (18, 28, 46, 48, 80, 82, 84, 86, 120, 122, 124, 126) dans la zone frontale (4, 6,40, 70,112,114) définissent en projection horizontale un angle compris entre 5° et 45°, de préférence entre 10° et 35°.

5. Carrosserie de véhicule selon une des revendications 1 à 4, **caractérisée en ce que** une zone frontale (4, 6,40,70,112,114) présente une pluralité de deuxièmes longerons (18, 28, 46, 48, 80, 82, 84, 86, 120, 122, 124, 126), qui sont disposés à l'extérieur du plan horizontal (56) d'un premier longeron (14,16,44, 74, 76, 78, 116, 118) et dont les directions d'extension (22, 30, 52, 54, 94, 96, 98, 100, 128, 130) s'étendent à au moins en formant un angle dans une projection horizontale par rapport à la direction d'extension (20, 32, 50, 88, 90, 92,132) du premier longeron (14,16, 44, 74, 76, 78, 116, 118).

6. Carrosserie de véhicule selon une des revendications 1 à 5, **caractérisée en ce que** au moins un deuxième longeron (18, 28, 46, 48, 80, 82, 84, 86, 120, 122, 124, 126) présente une section transversale plus petite qu'un premier longeron (14,16,44, 74, 76, 78, 116, 118).

7. Carrosserie de véhicule selon une des revendications 1 à 6, **caractérisée en ce que** dans une zone frontale (4,6,40, 70, 112, 114) au moins un deuxième longeron (18, 28, 46, 48, 80, 82, 84, 86, 120, 122, 124, 126) est disposé de telle sorte que son extrémité tournée vers l'avant se situe plus loin à l'extérieur dans la direction transversale que son extrémité tournée vers l'arrière.

8. Carrosserie de véhicule selon une des revendications 1 à 7, **caractérisée en ce que** la disposition du deuxième longeron (18, 28, 46, 48, 80, 82, 84, 86,120,122,124, 126) est adaptée de manière optimisée en fonction des charges aux forces générées lors d'une collision frontale oblique.

9. Carrosserie de véhicule selon une des revendications 1 à 8, **caractérisée en ce que** une zone frontale (4, 6, 40, 70, 112, 114) présente au moins deux premiers longerons (14,16, 44, 74, 76, 78,116,118) s'étendant dans la direction longitudinale et s'étendant essentiellement parallèles l'un à l'autre.

10. Carrosserie de véhicule selon une des revendications 1 à 9, **caractérisée en ce que** les longerons (14, 16,18, 28, 44, 46, 48, 74, 76, 78, 80, 82, 84, 86, 116, 118,120, 122, 124, 126) sont disposés dans la zone frontale du côté droit (4,6,40, 70,112, 114) en étant essentiellement symétriques aux longerons (14,16,18, 28,44,46, 48, 74, 76, 78, 80, 82, 84, 86, 116, 118, 120, 122, 124, 126) dans la zone frontale du côté gauche (4, 6, 40, 70, 112, 114).

11. Carrosserie de véhicule selon une des revendications 1 à 10, **caractérisée en ce que** dans une zone frontale (4, 6, 40, 70,112,114) au moins quatre, de préférence au moins cinq, de manière encore préférée au moins huit longerons (14, 16, 18, 28, 44, 46, 48, 74, 76, 78, 80, 82, 84, 86, 116, 118, 120, 122, 124, 126) sont prévus.

12. Carrosserie de véhicule selon une des revendications 1 à 11, **caractérisée en ce que** dans une zone frontale (4, 6, 40, 70, 112, 114) au moins deux longerons (14, 16, 18, 28, 44, 46, 48, 74, 76, 78, 80, 82, 84, 86, 116, 118, 120, 122, 124, 126), en particulier un premier longeron (14, 16, 44, 74, 76, 78, 116, 118) et un deuxième longeron (18, 28, 46, 48, 80, 82, 84, 86, 120, 122, 124, 126) sont reliés l'un à l'autre, de préférence par un profilé ou par une bande de tôle (134,136).

13. Utilisation d'une carrosserie de véhicule (2,42, 72,110) selon une des revendications 1 à 12, pour la fabrication d'un véhicule automobile sans moteur à combustion interne, notamment d'un véhicule électrique.
